# EUROPEAN PATENT APPLICATION

(11) **EP 4 697 451 A1**
(43) Date of publication of application: **18.02.2026**
(21) Application number: 24795483.7
(22) Date of filing: 25.01.2024
(51) Int. Cl.: H01M 10/613, H01M 10/615, H01M 10/6551, H01M 10/6554, H01M 10/6556, H01M 10/6568, H01M 10/6563, H01M 10/6571, H01M 10/659, H01M 10/635

(54) **ENERGY STORAGE SYSTEM**

(30) Priority: 28.04.2023 CN 202310485826
(71) Applicant: Huawei Digital Power Technologies Co., Ltd., Shenzhen, Guangdong 518043 (CN)
(72) Inventor: HUANG, Tao, Shenzhen, Guangdong 518043 (CN); LI, Malin, Shenzhen, Guangdong 518043 (CN); LI, Quanming, Shenzhen, Guangdong 518043 (CN); MENG, Hao, Shenzhen, Guangdong 518043 (CN); LIU, Huan, Shenzhen, Guangdong 518043 (CN); LI, Zhaohui, Shenzhen, Guangdong 518043 (CN)
(74) Representative: Maiwald GmbH
(86) International application number: PCT/CN2024/074027
(87) International publication number: WO 2024/222094

(57) **Abstract**

This application provides an energy storage system. The energy storage system includes a heat management apparatus and an energy storage module. The heat management apparatus is configured to exchange heat with the energy storage module. The heat management apparatus includes a refrigerant flow channel plate, a coolant flow channel plate, a multi-way valve, an evaporation plate heat exchanger, a condensation plate heat exchanger, and at least one pump. The refrigerant flow channel plate and the coolant flow channel plate are adjacently arranged in a first direction. The multi-way valve, the evaporation plate heat exchanger, and the condensation plate heat exchanger are adjacently arranged in a second direction. The at least one pump is arranged adjacent to the coolant flow channel plate in the first direction respectively, and the at least one pump is arranged adjacent to the refrigerant flow channel plate in a third direction respectively. According to the energy storage system provided in this application, main devices of the heat management apparatus can be arranged in a same direction and fastened to flow channel plates. This reduces a thickness of the heat management apparatus, and implements one-side maintenance and overhaul of the entire heat management apparatus, to reduce operation and maintenance costs of the energy storage system, and improve a service life and stability of the energy storage system.

## Description

This application claims priority to Chinese Patent Application No. 202310485826.0, filed with the China National Intellectual Property Administration on April 28, 2023 and entitled "ENERGY STORAGE SYSTEM", which is incorporated herein by reference in its entirety.

### TECHNICAL FIELD

This application relates to the field of heat management technologies, and more specifically, to an energy storage system.

### BACKGROUND

With the booming development of energy storage, new energy industries, and the like, importance and complexity of an energy storage system gradually increase. In addition to including an energy storage module and a battery module, the energy storage system also needs to consider heat dissipation and heat preservation requirements for the energy storage module at various ambient temperatures. A heat management apparatus of the energy storage system not only needs to dissipate heat generated by components such as a motor, the battery module, and various electronic components in a working process in a timely manner, but also needs to provide an appropriate operating ambient temperature for the motor, the battery, the components, and the like in cold weather.

Usually, the heat management apparatus in the energy storage system uses a refrigerant loop and a coolant loop to connect each component for heat exchange, to maintain a heat requirement of each component. However, there are a large quantity of coolant loops and refrigerant loops, and pipelines are complex. In addition, use of a multi-pipeline connection causes problems such as complex mounting of a heat management apparatus, large space occupation, low heat efficiency, difficult maintenance, and an excessively large overhaul area. Consequently, operation and maintenance costs of the energy storage system are increased. This affects a service life and stability of the energy storage system. Therefore, integration, miniaturization, easy overhaul, and the like of the entire heat management apparatus in the energy storage system are still problems that need to be urgently resolved in the industry.

### SUMMARY

This application provides an energy storage system. The energy storage system includes a heat management apparatus and an energy storage module. Main devices of the heat management apparatus are arranged in a same direction and fastened to flow channel plates. This reduces a thickness of the heat management apparatus, improves flexibility of a mounting location of the heat management apparatus, and implements one-side maintenance and overhaul of the entire heat management apparatus, to reduce operation and maintenance costs of the energy storage system and improve a service life and stability of the energy storage system.

According to a first aspect, an energy storage system is provided. The energy storage system includes a heat management apparatus and an energy storage module. Specifically, the heat management apparatus is configured to exchange heat with the energy storage module. The heat management apparatus includes a refrigerant flow channel plate, a coolant flow channel plate, a multi-way valve, an evaporation plate heat exchanger, a condensation plate heat exchanger, and at least one pump. The refrigerant flow channel plate and the coolant flow channel plate are adjacently arranged in a first direction. The evaporation plate heat exchanger and the condensation plate heat exchanger are fastened to the refrigerant flow channel plate. The multi-way valve, the evaporation plate heat exchanger, and the condensation plate heat exchanger are adjacently arranged in a second direction. The at least one pump is arranged adjacent to the coolant flow channel plate in the first direction respectively. The at least one pump is arranged adjacent to the refrigerant flow channel plate in a third direction respectively. Any two of the first direction, the second direction, and the third direction are perpendicular to each other.

Based on this technical solution, the refrigerant flow channel plate and the coolant flow channel plate are adjacently arranged in the first direction, and the pump, the evaporation plate heat exchanger, the condensation plate heat exchanger, and the multi-way valve are arranged on one side of the refrigerant flow channel plate in the first direction. The condensation plate heat exchanger and the evaporation plate heat exchanger are fastened to the refrigerant flow channel plate. In this way, main devices of the heat management apparatus are arranged in a same direction and fastened to flow channel plates. This reduces a thickness of the heat management apparatus, improves flexibility of a mounting location of the heat management apparatus, and implements one-side maintenance and overhaul of the entire heat management apparatus, to reduce operation and maintenance costs of the energy storage system and improve a service life and stability of the energy storage system.

It should be understood that, that the evaporation plate heat exchanger and the condensation plate heat exchanger are fastened to the refrigerant flow channel plate includes that the evaporation plate heat exchanger and the condensation plate heat exchanger are fastened to the refrigerant flow channel plate through mounting parts, including detachable fastening. The mounting parts may include mechanical structures such as a screw, a screw, a bolt, and a screw hole. This is not specifically limited in this application.

It should be understood that, that the evaporation plate heat exchanger and the condensation plate heat exchanger are fastened to the refrigerant flow channel plate includes that the evaporation plate heat exchanger and the condensation plate heat exchanger have contact surfaces with the refrigerant flow channel plate separately, and are attached and fastened through the contact surfaces, and includes detachable fastening. In addition to being fastened by using a mechanical structure, that the evaporation plate heat exchanger and the condensation plate heat exchanger are fastened to the refrigerant flow channel plate further includes being fastened by using a contact surface and an adhesive. This is not specifically limited in this application.

It should be understood that, that the evaporation plate heat exchanger and the condensation plate heat exchanger are fastened to the refrigerant flow channel plate includes that the evaporation plate heat exchanger and the condensation plate heat exchanger are fastened separately by using mechanical structures of mounting parts and communicate with a flow channel in the refrigerant flow channel plate. The evaporation plate heat exchanger and the condensation plate heat exchanger further communicate with a flow channel in the refrigerant flow channel plate by using another mechanical structure of a communication part. This is not specifically limited in this application.

It should be understood that a coolant flow channel is integrated inside the coolant flow channel plate, and the coolant flow channel plate communicates with a plurality of coolant circulation devices to form a plurality of groups of coolant circulation open circuits. The plurality of groups of coolant circulation open circuits form a plurality of groups of coolant circulation loops by communicating an external to-be-heat-exchanged device. A coolant includes a cooling medium such as water and antifreeze. This is not specifically limited in this application.

It should be understood that the refrigerant flow channel plate and the coolant flow channel plate are both plate-shaped, and may be approximately thin cuboids in shape. The refrigerant flow channel plate and the coolant flow channel plate are adjacently arranged. When the entire heat management apparatus is vertically mounted, the first direction is perpendicular to a gravity direction.

It should be understood that, in some embodiments, a refrigerant is also referred to as a refrigerant, a refrigerant, or the like. This is merely a reference in terms of a name, and does not have any limitation on the actual protection scope of this application. This is not specifically limited in this application.

With reference to the first aspect, in some implementations of the first aspect, the refrigerant flow channel plate is arranged between the evaporation plate heat exchanger and the coolant flow channel plate in the first direction, and is arranged between the condensation plate heat exchanger and the coolant flow channel plate. The evaporation plate heat exchanger and the condensation plate heat exchanger are adjacently arranged in the second direction or the third direction.

Based on this technical solution, the condensation plate heat exchanger and a coolant plate heat exchanger are adjacently arranged and fastened to the refrigerant flow channel plate in the second direction or the third direction. The refrigerant flow channel plate is located between plate heat exchanger devices and the coolant flow channel plate. This reduces a thickness of the heat management apparatus, improves flexibility of a mounting location of the heat management apparatus, and implements one-side maintenance and overhaul of the entire heat management apparatus, to reduce operation and maintenance costs of the energy storage system and improve a service life and stability of the energy storage system.

It should be understood that the evaporation plate heat exchanger and the condensation plate heat exchanger are fastened to the refrigerant flow channel plate. The refrigerant flow channel plate is arranged between the evaporation plate heat exchanger and the coolant flow channel plate, and is arranged between the condensation plate heat exchanger and the coolant flow channel plate. In the first direction, the coolant flow channel plate, the refrigerant flow channel plate, and the plate heat exchanger devices are sequentially arranged, and the evaporation plate heat exchanger and the condensation plate heat exchanger are arranged on a same plane. The evaporation plate heat exchanger and the condensation plate heat exchanger are adjacently arranged on the refrigerant flow channel plate in the second direction or the third direction.

It should be understood that, when the entire heat management apparatus is vertically mounted, the third direction is parallel to the gravity direction.

With reference to the first aspect, in some implementations of the first aspect, the heat management apparatus includes two pumps. The two pumps are separately configured to pressurize a coolant in the coolant flow channel plate. The two pumps are separately fastened to the coolant flow channel plate and the two pumps are adjacently arranged in the second direction.

Based on this technical solution, the two pumps are adjacently arranged and fastened to the coolant flow channel plate in the second direction, and arranged adjacent to the refrigerant flow channel plate in the third direction. In this way, main devices of the heat management apparatus are arranged in a same direction and fastened to flow channel plates. This reduces a thickness of the heat management apparatus, improves flexibility of a mounting location of the heat management apparatus, and implements one-side maintenance and overhaul of the entire heat management apparatus, to reduce operation and maintenance costs of the energy storage system and improve a service life and stability of the energy storage system.

It should be understood that the pump and the refrigerant flow channel plate are both fastened to the coolant flow channel plate. The coolant flow channel plate has a region that is not covered by the refrigerant flow channel plate, and the uncovered region includes a fixed region of the pump, so that a thickness of the heat management apparatus can be further reduced.

It should be understood that fastening of the pump and the coolant flow channel plate includes detachable fastening, and the pump communicates with the coolant flow channel plate detachably. Detachable fastening and detachable communication are implemented by using a same mechanical structure, or are implemented by using a plurality of mechanical structures. This is not specifically limited in this application. A manner of fastening the pump and the coolant flow channel plate includes a manner of fastening the evaporation plate heat exchanger and the condensation plate heat exchanger, and the refrigerant flow channel plate. Details are not described herein again. This is not specifically limited in this application.

With reference to the first aspect, in some implementations of the first aspect, the heat management apparatus includes a coolant tank. The coolant tank is stacked on the coolant flow channel plate in the third direction. A projection of the coolant tank covers a projection of the coolant flow channel plate and a projection of the refrigerant flow channel plate in the third direction.

Based on this technical solution, the coolant tank is fastened to the coolant flow channel plate in the third direction, and a projection area of the coolant tank covers the coolant flow channel plate and the refrigerant flow channel plate. This reduces a thickness of the heat management apparatus, improves flexibility of a mounting location of the heat management apparatus, and implements one-side maintenance and overhaul of the entire heat management apparatus, to reduce operation and maintenance costs of the energy storage system and improve a service life and stability of the energy storage system.

It should be understood that, when the entire heat management apparatus is vertically mounted, the coolant tank is fastened to the top of the coolant flow channel plate, and a thickness of the coolant tank is greater than a thickness of the coolant flow channel plate in the first direction. The coolant tank is fastened to the top of the coolant flow channel plate to reduce a thickness of the heat management apparatus, and it is also convenient to supplement or add a coolant to the coolant flow channel plate.

It should be understood that fastening of the coolant tank and the coolant flow channel plate includes detachable fastening, and the coolant tank communicates with the coolant flow channel plate. Detachable fastening and detachable communication are implemented by using a same mechanical structure, or are implemented by using a plurality of mechanical structures. This is not specifically limited in this application. A manner of fastening the coolant tank and the coolant flow channel plate includes a manner of fastening the evaporation plate heat exchanger and the condensation plate heat exchanger, and the refrigerant flow channel plate. Details are not described herein again. This is not specifically limited in this application.

With reference to the first aspect, in some implementations of the first aspect, the heat management apparatus includes an electric heating assembly. The electric heating assembly is fastened to the coolant tank. The electric heating assembly and the coolant tank are adjacently arranged in the first direction. The electric heating assembly and the at least one pump are adjacently arranged in the third direction. The projection of the coolant tank covers a projection of the electric heating assembly in the third direction.

Based on this technical solution, the electric heating assembly is arranged and fastened to the coolant tank in the first direction, and is arranged with the pump in the third direction. When observed in the third direction, the projection of the coolant tank covers the projection of the electric heating assembly, a projection of the pump, and the projection of the refrigerant flow channel plate. This reduces a thickness of the heat management apparatus, improves flexibility of a mounting location of the heat management apparatus, and implements one-side maintenance and overhaul of the entire heat management apparatus, to reduce operation and maintenance costs of the energy storage system and improve a service life and stability of the energy storage system.

In some embodiments of this application, a structural shape of the coolant tank includes approximately an inverted "L" shape observed in the second direction. This is not specifically limited in this application. The electric heating assembly is fastened to the bottom of a thickest part of the coolant tank, and is fastened to the coolant tank in a stacked manner in the first direction. The electric heating assembly is configured to electrically heat the coolant flow channel when an ambient temperature is low. When observed in the third direction, the projection of the coolant tank covers the projection of the electric heating assembly.

It should be understood that fastening of the electric heating assembly and the coolant tank includes detachable fastening. Detachable fastening is implemented by using a same mechanical structure, or is implemented by using a plurality of mechanical structures. This is not specifically limited in this application. A manner of fastening the electric heating assembly and the coolant tank includes a manner of fastening the evaporation plate heat exchanger and the condensation plate heat exchanger, and the refrigerant flow channel plate. Details are not described herein again. This is not specifically limited in this application.

With reference to the first aspect, in some implementations of the first aspect, the heat management apparatus further includes a dehumidification module. The dehumidification module and the multi-way valve are arranged on two sides of the evaporation plate heat exchanger and the condensation plate heat exchanger in the second direction.

Based on this technical solution, the heat management apparatus further includes the dehumidification module, configured to perform dehumidification inside a mounting environment of the energy storage system, provide proper ambient humidity for the energy storage module and a related electronic component in the energy storage system, and avoid condensation of water vapor in air on a surface of the energy storage module or the related electronic component due to temperature change, to reduce operation and maintenance costs of the energy storage system and improve a service life and stability of the energy storage system.

It should be understood that, when observed in the second direction, an arrangement sequence of devices includes the following: the dehumidification module, the multi-way valve, and a heat exchange plate exchanger; the dehumidification module, a heat exchange plate exchanger, and the multi-way valve; the multi-way valve, a heat exchange plate exchanger, and the dehumidification module; or a heat exchange plate exchanger, the multi-way valve, and the dehumidification module. The heat exchange plate exchanger includes the condensation plate heat exchanger and the evaporation plate heat exchanger. The condensation plate heat exchanger and the evaporation plate heat exchanger are arranged in the second direction or the third direction. With reference to arrangement manners of the heat exchange plate exchanger, more arrangement manners are included when observed between the dehumidification module, the multi-way valve, and the heat exchange plate exchanger in the second direction. Details are not described herein again.

With reference to the first aspect, in some implementations of the first aspect, the coolant flow channel plate includes two second side surfaces in the second direction. One of the second side surfaces includes a plurality of connection ports. The connection port is configured to communicate the coolant flow channel plate with one to-be-heat-exchanged device. The plurality of connection ports on the second side surface are sequentially arranged at intervals in the third direction.

Based on this technical solution, the coolant flow channel plate includes the two second side surfaces in the second direction, and one of the second side surfaces includes the plurality of connection ports that are configured to communicate with the external to-be-heat-exchanged device to form a coolant circulation loop. In addition, the plurality of connection ports are arranged in the third direction. This reduces a thickness of the heat management apparatus, improves flexibility of a mounting location of the heat management apparatus, and implements one-side maintenance and overhaul of the entire heat management apparatus, to reduce operation and maintenance costs of the energy storage system and improve a service life and stability of the energy storage system.

It should be understood that, one connection port is configured to connect one to-be-heat-exchanged device to form a group of coolant circulation loops. Two connection ports are required for communication between one to-be-heat-exchanged device and the coolant flow channel plate. One connection port is configured to flow the coolant from the coolant flow channel plate into the to-be-heat-exchanged device, and the other connection port is configured to flow the coolant from the to-be-heat-exchanged device into the coolant flow channel plate.

It should be understood that the to-be-heat-exchanged device is detachably fastened to and communicates with the coolant flow channel plate through the connection port. A fastening manner and a communication manner included in detachable fastening and detachable communication are not described herein again.

With reference to the first aspect, in some implementations of the first aspect, the plurality of connection ports on the second side surface are arranged opposite to the dehumidification module in the second direction.

Based on this technical solution, the coolant flow channel plate includes the two second side surfaces in the second direction. One second side surface is configured to fasten the dehumidification module, and the other second side surface is configured to dispose the plurality of connection ports. This arrangement manner reduces a thickness of the heat management apparatus, improves flexibility of a mounting location of the heat management apparatus, and implements one-side maintenance and overhaul of the entire heat management apparatus, to reduce operation and maintenance costs of the energy storage system and improve a service life and stability of the energy storage system.

With reference to the first aspect, in some implementations of the first aspect, the coolant flow channel plate includes two third side surfaces in the third direction. One third side surface away from the coolant tank in the third direction includes a plurality of connection ports. The plurality of connection ports on the third side surface are sequentially arranged at intervals in the second direction.

Based on this technical solution, the coolant flow channel plate includes the two third side surfaces in the third direction. One third side surface is configured to fasten the coolant tank, the other third side surface is configured to dispose the plurality of connection ports. The connection ports are arranged in the second direction. This arrangement manner reduces a thickness of the heat management apparatus, improves flexibility of a mounting location of the heat management apparatus, and implements one-side maintenance and overhaul of the entire heat management apparatus, to reduce operation and maintenance costs of the energy storage system and improve a service life and stability of the energy storage system.

With reference to the first aspect, in some implementations of the first aspect, the plurality of connection ports on one third side surface are arranged opposite to the coolant tank in the third direction.

Based on this technical solution, the coolant flow channel plate includes the two third side surfaces in the third direction. The third side surface is configured to fasten the coolant tank, the other third side surface is configured to dispose the plurality of connection ports. The connection ports are arranged in the second direction. This arrangement manner reduces a thickness of the heat management apparatus, improves flexibility of a mounting location of the heat management apparatus, and implements one-side maintenance and overhaul of the entire heat management apparatus, to reduce operation and maintenance costs of the energy storage system and improve a service life and stability of the energy storage system.

With reference to the first aspect, in some implementations of the first aspect, the refrigerant flow channel plate includes a first through hole. The first through hole penetrates through the refrigerant flow channel plate in the first direction. The multi-way valve is embedded in the first through hole. The multi-way valve communicates with the coolant flow channel plate and the refrigerant flow channel plate through the first through hole.

Based on this technical solution, the multi-way valve is embedded and fastened to the coolant flow channel plate through the first through hole on the refrigerant flow channel plate, and the multi-way valve communicates with the coolant flow channel plate and the refrigerant flow channel plate through the first through hole. In this embedded manner, main devices of the heat management apparatus are arranged in a same direction and fastened to flow channel plates. This reduces a thickness of the heat management apparatus, improves flexibility of a mounting location of the heat management apparatus, and implements one-side maintenance and overhaul of the entire heat management apparatus, to reduce operation and maintenance costs of the energy storage system and improve a service life and stability of the energy storage system.

It should be understood that, a surface area of a contact surface of the multi-way valve fastened to the coolant flow channel plate is less than or equal to a surface area of the first through hole. The first through hole includes a communication part and a fastening part of the second flow channel plate that are configured to communicate with and fasten the multi-way valve, or the first through hole includes a multi-way valve fastened by using a fit size or a special structure shape. This is not specifically limited in this application.

It should be understood that the multi-way valve is detachably fastened to and communicates with the coolant flow channel plate and the refrigerant flow channel plate. A specific fastening manner, a specific detachment manner, and an implementation structure are not specifically limited in this application.

With reference to the first aspect, in some implementations of the first aspect, the refrigerant flow channel plate includes at least one second through hole. The at least one second through hole penetrates through the refrigerant flow channel plate in the first direction. At least one of the evaporation plate heat exchanger or the condensation plate heat exchanger communicates with the coolant flow channel plate through the at least one second through hole.

Based on this technical solution, a communication manner between the evaporation plate heat exchanger or the condensation plate heat exchanger and the coolant flow channel plate includes communication through the second through hole on the refrigerant flow channel plate. In this communication manner, main devices of the heat management apparatus are arranged in a same direction and fastened to flow channel plates. This reduces a thickness of the heat management apparatus, improves flexibility of a mounting location of the heat management apparatus, and implements one-side maintenance and overhaul of the entire heat management apparatus, to reduce operation and maintenance costs of the energy storage system, and improves a service life and stability of the energy storage system.

It should be understood that both the first through hole and the second through hole are holes that penetrate through the refrigerant flow channel plate in the first direction. A diameter, a size, a quantity, and the like of a through hole are determined by a volume feature, a mounting part feature, and the like of a mounted device or a fastened device. This is not specifically limited in this application.

It should be understood that, that the heat exchange plate exchanger communicates with the coolant flow channel plate through the through hole includes that the heat exchange plate exchanger detachably communicates with the coolant flow channel plate through the through hole. A quantity and a size of the through hole required for communication between the heat exchange plate exchanger and the coolant flow channel plate are determined by a specific device structure and a size. This is not specifically limited in this application.

It should be understood that detachable communication and detachable fastening between the heat exchange plate exchanger and the refrigerant flow channel plate include communication and fastening through the through hole, and further include communication and fastening through an external pipe. This is not specifically limited in this application.

It should be understood that detachable fastening and detachable communication are implemented by using a same mechanical structure, or are implemented by using a plurality of mechanical structures. This is not specifically limited in this application.

It should be understood that, disposed locations and structures of the mounting part, the fastening part, the communication part, and the like between the heat exchange plate exchanger and the coolant flow channel plate and between the heat exchange plate exchanger and the refrigerant flow channel plate are determined by specific device features. This is not specifically limited in this application.

With reference to the first aspect, in some implementations of the first aspect, the energy storage system includes a cabinet. The cabinet is configured to accommodate the energy storage module and the heat management apparatus. The cabinet includes an openable and closable cabinet door. The cabinet door is configured to fasten the heat management apparatus. The cabinet door, the coolant flow channel plate, and the refrigerant flow channel plate are sequentially and adjacently arranged in the first direction.

Based on this technical solution, the energy storage system further includes the cabinet. The heat management apparatus is mounted on the cabinet door. The cabinet door, the coolant flow channel plate, and the refrigerant flow channel plate are sequentially arranged in the first direction. This mounting manner saves internal space of the cabinet, improves flexibility of a mounting location of the heat management apparatus, and implements one-side maintenance and overhaul of the entire heat management apparatus, to reduce operation and maintenance costs of the energy storage system and improve a service life and stability of the energy storage system.

It should be understood that, when the heat management apparatus is mounted in the cabinet, the dehumidification module is configured to dehumidify air in the cabinet, to avoid condensation of water vapor in the air on the surface of the energy storage module or the related component in the cabinet. To accelerate air circulation in the cabinet, a fan is mounted in another location in the cabinet, to accelerate dehumidification efficiency of the air in the cabinet. This is not specifically limited in this application.

With reference to the first aspect, in some implementations of the first aspect, the coolant flow channel plate includes at least one mounting through hole and at least one fastener. Each mounting through hole penetrates through the coolant flow channel plate in the first direction and is configured to accommodate one or more fasteners passing through the mounting through hole. The fastener is configured to fasten the coolant flow channel plate to the refrigerant flow channel plate and fasten the coolant flow channel plate to the cabinet door of the energy storage system.

Based on this technical solution, the coolant flow channel plate is provided with the mounting through hole and the fastener. The fastener is configured to fasten the coolant flow channel plate to the refrigerant flow channel plate, and is further configured to fasten the entire heat management apparatus to the cabinet door of the energy storage system. In this fastening manner, main devices of the heat management apparatus are arranged in a same direction and fastened to flow channel plates. This reduces a thickness of the heat management apparatus, improves flexibility of a mounting location of the heat management apparatus, and implements one-side maintenance and overhaul of the entire heat management apparatus, to reduce operation and maintenance costs of the energy storage system and improve a service life and stability of the energy storage system.

It should be understood that mounting of the entire heat management apparatus includes that the fastener is disposed on the coolant flow channel plate, the entire heat management apparatus is fastened to the cabinet door through the mounting through hole on the coolant flow channel plate, and the refrigerant flow channel plate is fastened through the fastener on the coolant flow channel plate. The mounting of the entire heat management apparatus further includes that the fastener and the mounting through hole that are disposed on both the coolant flow channel plate and the refrigerant flow channel plate, and the mounting through hole and the fastener are also disposed on the refrigerant flow channel plate, to fasten the coolant flow channel plate, and further configured to fasten the entire heat management apparatus to the cabinet door using the coolant flow channel plate as a back plate. This is not specifically limited in this application.

It should be understood that a location, a structure, a quantity, and the like of the mounting through hole, the fastener, and the like on the coolant flow channel plate and the refrigerant flow channel plate are determined by a specific mounting environment. This is not specifically limited in this application.

### BRIEF DESCRIPTION OF DRAWINGS

FIG. 1 is a schematic of a structure of a heat management apparatus according to an embodiment of this application;
FIG. 2 is a schematic of a structure of a heat management apparatus in an energy storage system according to an embodiment of this application;
FIG. 3 is a schematic of a structure of another heat management apparatus in an energy storage system according to an embodiment of this application;
FIG. 4 is a schematic of a fixed location of a flow channel plate in an energy storage system according to an embodiment of this application;
FIG. 5 is a schematic of a mounting through hole of a coolant flow channel plate in an energy storage system according to an embodiment of this application;
FIG. 6 is a schematic of flow channel communication of a heat management apparatus in an energy storage system according to an embodiment of this application; and
FIG. 7 is a schematic of an energy storage system according to an embodiment of this application.

Reference numerals: 10: coolant flow channel plate; 11: connection port; 12: front plate surface; 13: side plate surface; 14: top plate surface; 15: bottom plate surface; 16: mounting through hole; 20: refrigerant flow channel plate; 21: second through hole; 22: first through hole; 30: multi-way valve; 40: heat exchange plate exchanger; 41: evaporation plate heat exchanger; 42: condensation plate heat exchanger; 50: pump; 60: coolant tank; 70: electric heating assembly; 80: dehumidification module; 100: integrated flow channel plate; 110: refrigerant end assembly; 120: coolant end assembly; 130: heat exchange assembly; 200: cabinet; 201: cabinet door; 202: energy storage module; 203: heat management apparatus.

### DESCRIPTION OF EMBODIMENTS

The following describes technical solutions in this application with reference to the accompanying drawings.

It should be noted that, in descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in descriptions of embodiments of this application, "a plurality of" means two or more, and "at least one" and "one or more" mean one, two, or more. The singular expression forms "one", "a", "the", "the foregoing", "this", and "the one" are also intended to include an expression form such as "one or more", unless the opposite is explicitly indicated in the context thereof.

Reference to "one embodiment" or "some embodiments" described in this specification means that a specific characteristic, structure or feature described in combination with this embodiment is included in one or more embodiments of this application. Therefore, statements "in one embodiment", "in some embodiments", "in some other embodiments", "in other embodiments", and the like that appear at different places in this specification do not necessarily refer to the same embodiment, but mean "one or more but not all embodiments", unless otherwise specially emphasized in another manner. Terms "include", "comprise", "have", and variations thereof all mean "including but not limited to", unless otherwise specially emphasized in another manner.

In descriptions of embodiments of this application, an orientation or a location relationship indicated by the terms "above", "below", "left", "right", "vertical", "horizontal", and the like is defined relative to an orientation or a location at which a component is schematically placed in the accompanying drawings. It should be understood that these directional terms are relative concepts, and are used for relative description and clarification, instead of indicating or implying that a specified apparatus or component needs to have a specific orientation, or being constructed and operated in a specific orientation. The apparatus or component may be correspondingly changed based on a change of an orientation in which a component is placed in the accompanying drawings. Therefore, such terms shall not be understood as a limitation on this application.

In embodiments of this application, a same reference numeral represents a same part or a same component. In addition, the parts in the accompanying drawings are not drawn to a proportion, and sizes of the parts shown in the figures are merely examples, and should not be understood as a limitation on this application.

In this application, unless otherwise specified and limited, terms such as "mounting", "connection", "fastening", "communication", and "configuration" should be understood in a broad sense. For example, the terms may be fastened connection, detachable connection, detachable fastening, or integrated connection; or may be mechanical connection or electrical connection; or may be a direct connection, an indirect connection through an intermediate medium, a communication inside two devices or an interaction relationship between two devices, unless otherwise specified. A person of ordinary skill in the art may interpret specific meanings of the foregoing terms in this application according to specific cases.

It should be noted that, when the device is referred to as "fastened to", "disposed on", or "configured on" another device, the device may be directly on the another device, or a device may exist in the middle. When a device is described as "connected to" another device, the device may be directly connected to the another element, or a device may exist in the middle. The terms "vertical", "horizontal", "up", "down", "left", "right", and similar expressions used in this specification are merely for description, and do not represent a unique implementation.

With booming development of new energy and energy storage industries, importance and complexity of a heat management system that exchanges heat with an energy storage module such as a battery module gradually increase. There are a large quantity of coolant loops and refrigerant loops, and pipelines are complex. The related coolant loop includes a battery loop, a centralized heat dissipation loop, and a power module loop of the power conversion system (Power Conversion System, PCS). Main devices related in the coolant loop include a multi-way valve, a pump, a coolant tank, a water temperature sensor, and the like, and there is a motor loop in a vehicle-mounted field. The refrigerant loop mainly includes an electronic expansion valve, a solenoid valve, and a PT sensor. To implement communication of the foregoing components, traditional pipes are configured to connect the components. Use of a multi-pipeline connection causes problems such as complex mounting, large space occupation, low heat efficiency, difficult maintenance, and an excessively large overhaul area. Lightweight, miniaturization, integration, easy overhaul, and easy maintenance of the heat management system and a heat management apparatus have become industry trends.

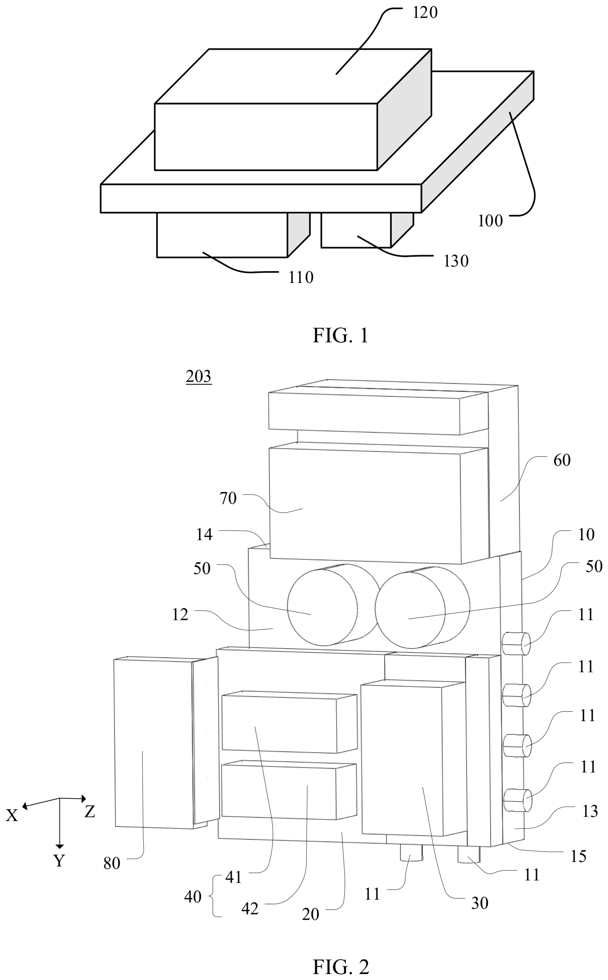

In an existing integration solution, a coolant loop device and a refrigerant loop device are usually integrated on a flow channel plate on two separate sides, as shown in FIG. 1. In the heat integration solution, a refrigerant flow channel and a coolant flow channel are disposed in an integrated flow channel plate 100, a refrigerant end assembly 110 and a coolant end assembly 120 are separately disposed on two sides of the integrated flow channel plate 100, and a heat exchange assembly 130 is disposed to complete heat exchange between the refrigerant flow channel and the coolant flow channel. In an existing solution in which two sides of a refrigerant side and a water side are stacked, the refrigerant end assembly 110 integrates and mounts a related component on the refrigerant side by using the integrated flow channel plate 100, and communicates a refrigerant side device through the refrigerant flow channel in the integrated flow channel plate 100. The coolant end assembly 120 integrates and mounts a related component on the water side by using the integrated flow channel plate 100, and communicates a water side device through a water path flow channel in the integrated flow channel plate 100. Then, the components on the water side and the refrigerant side are integrated in a stacking manner, to achieve an objective of heat exchange.

In a conventional technology, based on an integrated flow channel plate, a refrigerant end assembly and a coolant end assembly are fastened to two sides of the flow channel plate in a double-sided stacking manner and communicate with a corresponding flow channel and a pipeline. An entire heat integrated module occupies too much space in a thickness direction (that is, an arrangement direction of the refrigerant end assembly, the flow channel plate, and the coolant end assembly), and a thickness direction size cannot be reduced, limiting mounting and use of the heat integrated module. Further, in a double-sided stacking arrangement manner, when a fault occurs in a heat integrated apparatus during subsequent use and maintenance is required, a device needs to be maintained from two sides of the apparatus, which causes problems such as maintenance difficulty and an excessively large overhaul area. In addition, existing pipeline connection is complex, and an unreasonable pipeline design causes problems such as large flow resistance of the pipeline and low heat exchange efficiency.

This application provides an energy storage system. The energy storage system includes a heat management apparatus and an energy storage module. Main devices of the heat management apparatus are arranged in a same direction and fastened to flow channel plates. This reduces a thickness of the heat management apparatus, improves flexibility of a mounting location of the heat management apparatus, and implements one-side maintenance and overhaul of the entire heat management apparatus, to reduce operation and maintenance costs of the energy storage system and improve a service life and stability of the energy storage system.

An embodiment of this application provides an energy storage system. The energy storage system includes a heat management apparatus 203 and an energy storage module. The heat management apparatus 203 is configured to exchange heat with the energy storage module. FIG. 2 is a schematic of a structure of the heat management apparatus 203. Flow channel loops of the heat management apparatus 203 in this application are respectively integrated on two flow channel plates: A flow channel loop of a coolant is integrated in a coolant flow channel plate 10. A flow channel loop of a refrigerant is integrated in a refrigerant flow channel plate 20.

In this embodiment of this application, the heat management apparatus 203 includes the refrigerant flow channel plate 20, the coolant flow channel plate 10, a multi-way valve 30, an evaporation plate heat exchanger 41, a condensation plate heat exchanger 42, and pumps 50. The refrigerant flow channel plate 20 and the coolant flow channel plate 10 are adjacently arranged in a first direction. The arrangement direction is defined as a first direction X. A reference coordinate system is set based on the first direction X, and a second direction Z and a third direction Y are set. Any two of the first direction X, the second direction Z, and the third direction Y are perpendicular to each other, and the third direction Y is parallel to a gravity direction. The evaporation plate heat exchanger 41 and the condensation plate heat exchanger 42 are fastened to the refrigerant flow channel plate 20. The multi-way valve 30 is arranged adjacent to the evaporation plate heat exchanger 41 and the condensation plate heat exchanger 42 in the second direction Z. The pumps 50 are arranged adjacent to the coolant flow channel plate 10 in the first direction X. The pumps 50 are arranged adjacent to the refrigerant flow channel plate 20 in the third direction Y. The refrigerant flow channel plate 20 is arranged between the evaporation plate heat exchanger 41 and the coolant flow channel plate 10, and is arranged between the condensation plate heat exchanger 42 and the coolant flow channel plate 10 in the first direction X.

In this embodiment of this application, the coolant flow channel plate 10 is attached and fastened to the refrigerant flow channel plate 20, and the refrigerant flow channel plate 20 is attached and fastened to the coolant flow channel plate 10 through a front plate surface 12 of the coolant flow channel plate 10. The heat management apparatus further includes the multi-way valve 30. The multi-way valve 30 and the refrigerant flow channel plate 20 are mounted and fastened to a same side of the coolant flow channel plate 10. The multi-way valve 30 and the front plate surface 12 of the coolant flow channel plate 10 are fastened in a detachable connection manner. The multi-way valve 30 communicates with a coolant flow channel in the coolant flow channel plate 10, and forms a plurality of groups of heat circulation open circuits by switching different coolant flow channel communication modes. The heat circulation open circuit is then connected to a heat exchange channel of an external to-be-heat-exchanged structure to form a corresponding heat circulation loop.

In an implementation, the heat management apparatus 203 in the energy storage system includes two pumps 50. The pumps 50 communicate with the coolant flow channel in the coolant flow channel plate 10. The pumps 50 are configured to pressurize the coolant in the coolant flow channel plate 10 to drive the coolant to circulate in the flow channel. The two pumps 50 are fastened to the coolant flow channel plate 10 separately, and are adjacently arranged in the second direction Z.

In an implementation, the heat management apparatus 203 in the energy storage system includes a coolant tank 60. The coolant tank 60 is stacked on the coolant flow channel plate 10 in the third direction Y. A projection of the coolant tank 60 covers a projection of the coolant flow channel plate 10 and a projection of the refrigerant flow channel plate 20 in the third direction Y.

In this embodiment of this application, the coolant tank 60 is fastened to a top plate surface 14 of the coolant flow channel plate 10. When observed in the third direction Y, a thickness of the coolant tank 60 in the first direction X is greater than that of the coolant flow channel plate 10, and the projection of the coolant tank 60 covers projections of the coolant flow channel plate 10 and the refrigerant flow channel plate 20. The coolant tank 60 is disposed at a topmost part of the entire heat management apparatus 203 in the third direction Y. The coolant tank 60 communicates with the coolant flow channel in the coolant flow channel plate 10, and is configured to add or supplement a coolant to the coolant flow channel plate 10.

In an implementation, the heat management apparatus 203 in the energy storage system includes a dehumidification module 80. The dehumidification module 80 is configured to dehumidify air in an environment in which the heat management apparatus 203 is mounted, to avoid impact on heat exchange efficiency caused by condensation of water vapor in the air on an outer wall of a pipeline or a flow channel plate of the heat management apparatus 203, and avoid impact on working of a circuit caused by condensation of the water vapor in the air on a surface of another electronic component in the energy storage system. The dehumidification module 80 and the multi-way valve 30 are arranged on two sides of the evaporation plate heat exchanger 41 and the condensation plate heat exchanger 42 in the second direction Z.

In this embodiment of this application, the dehumidification module 80 is fastened to a left side surface of the refrigerant flow channel plate 20. A left side includes a reverse direction side of the second direction Z. The dehumidification module 80, the evaporation plate heat exchanger 41 and the condensation plate heat exchanger 42, and the multi-way valve 30 are sequentially arranged.

In an implementation, the coolant flow channel plate 10 includes two second side surfaces in the second direction Z. One of the second side surfaces includes a plurality of connection ports 11. The connection ports 11 are configured to communicate the coolant flow channel plate 10 with one to-be-heat-exchanged device. The plurality of connection ports 11 on the second side surface are sequentially arranged at intervals in the third direction Y.

In this embodiment of this application, N groups of circulation flow paths are integrated in the coolant flow channel plate 10. The coolant flow channel plate 10 includes the two second side surfaces in the second direction Z. The two second side surfaces include side plate surfaces 13. The side plate surfaces 13 include a left side plate surface and a right side plate surface. The plurality of connection ports 11 on the second side surface are arranged opposite to the dehumidification module 80 in the second direction Z. In this embodiment of this application, the plurality of connection ports 11 are disposed on one side plate surface 13. The dehumidification module 80 is fastened to the refrigerant flow channel plate 20 on one side of the other side plate surface. The connection ports 11 are configured to communicate with the to-be-heat-exchanged structure of an external coolant flow channel to form a heat circulation loop.

In an implementation, the coolant flow channel plate 10 includes two third side surfaces in the third direction Y. A plurality of connection ports 11 on one third side surface are arranged opposite to the coolant tank 60 in the third direction Y. The third side surfaces include a top plate surface 14 and a bottom plate surface 15. One third side surface is configured to fasten the coolant tank 60, and the connection ports 11 are disposed on the other third side surface. The N groups of circulation flow paths are integrated in the coolant flow channel plate 10, and 2N connection ports 11 are disposed on the second side surface and the third side surface of the coolant flow channel plate in total. The connection ports 11 on the second side surface are arranged in the third direction Y, and the connection ports 11 on the third side surface are arranged in the second direction Z.

In this embodiment of this application, three groups of circulation flow paths are integrated in the coolant flow channel plate 10, four connection ports 11 are disposed on the right side plate surface of the side plate surfaces 13, two connection ports 11 are disposed on the bottom plate surface 15, and the connection ports 11 are configured to communicate with the to-be-heat-exchanged structure of the external coolant flow channel to form the heat circulation loop.

It should be understood that a quantity of pumps 50 and a quantity of connection ports 11 in the accompanying drawings of embodiments provided in this application are merely examples, and do not constitute any limitation on a specific quantity of pumps 50 and a specific quantity of connection ports 11. A specific protection scope shall be subject to the claims. This is not specifically limited in this application.

It should be understood that the coolant includes a cooling medium such as water and antifreeze. The coolant flow channel plate is merely a name, and does not constitute any special limitation on this application. In some embodiments, the coolant flow channel plate may also be referred to as a water path flow channel plate, a water path flow channel plate, a coolant flow channel plate, or the like. This is not specifically limited in this application.

It should be understood that the refrigerant includes a refrigerant and the like. The refrigerant flow channel plate is merely a name, and does not constitute any special limitation on this application. In some embodiments, the refrigerant flow channel plate may also be referred to as a refrigerant flow channel plate, a refrigerant flow channel plate, a refrigerant flow channel plate, or the like. This is not specifically limited in this application.

It should be understood that the connection port is merely a name, and does not constitute any special limitation on this application. In some embodiments, the connection port may also be referred to as a connection valve, a communication valve, a water path interface, or the like. This is not specifically limited in this application.

It should be understood that the heat management apparatus is merely a name, and does not constitute any special limitation on this application. In some embodiments, the heat management apparatus may also be referred to as an integrated apparatus, a heat management apparatus, a heat exchange integrated apparatus, a heat management integrated module, or the like. This is not specifically limited in this application.

In an implementation, the evaporation plate heat exchanger 41 and the condensation plate heat exchanger 42 in the heat management apparatus 203 are adjacently arranged in the second direction Z or the third direction Y.

In this embodiment of this application, the evaporation plate heat exchanger 41 and the condensation plate heat exchanger 42 in the heat management apparatus 203 are adjacently arranged in the third direction Y, as shown in FIG. 2.

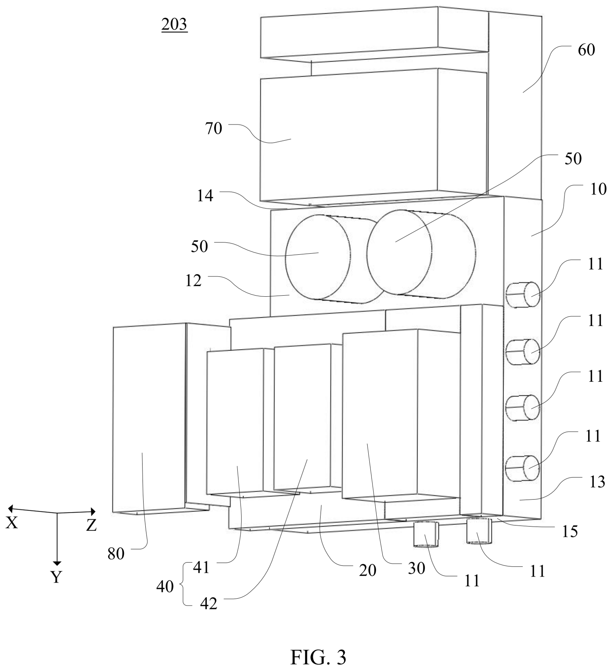

In this embodiment of this application, the evaporation plate heat exchanger 41 and the condensation plate heat exchanger 42 in the heat management apparatus 203 are adjacently arranged in the second direction Z, as shown in FIG. 3.

In this embodiment of this application, a heat exchange plate exchanger 40 includes the evaporation plate heat exchanger 41 and the condensation plate heat exchanger 42. A refrigerant flow channel and a coolant flow channel are integrated in each heat exchange plate exchanger 40, and the heat exchange plate exchanger 40 communicates with flow channels in the coolant flow channel plate 10 and the refrigerant flow channel plate 20 separately, to form a heat circulation open circuit. That the heat exchange plate exchanger 40 is configured to provide heat exchange for the coolant flow channel plate 10 includes providing heat for the coolant in the coolant flow channel plate 10, and also includes taking away heat from the coolant. The evaporation plate heat exchanger 41 communicates with the coolant flow channel in the coolant flow channel plate 10 and the refrigerant flow channel in the refrigerant flow channel plate 20 separately. The condensation plate heat exchanger 42 communicates with the coolant flow channel in the coolant flow channel plate 10 and the refrigerant flow channel in the refrigerant flow channel plate 20 separately. In the evaporation plate heat exchanger 41, the refrigerant in the refrigerant flow channel changes from a liquid state to a gas state, and at the same time, takes away heat from the coolant in the coolant flow channel. In the condensation plate heat exchanger 42, the refrigerant in the refrigerant flow channel changes from a gas state to a liquid state, and at the same time, provides heat for the coolant in the coolant flow channel.

It should be understood that the evaporation plate heat exchanger and the condensation plate heat exchanger are merely names, and do not constitute any special limitation on this application. In some embodiments, the evaporation plate heat exchanger and the condensation plate heat exchanger may also be referred to as an evaporation plate, a condensation plate, a heat exchanger, or the like. This is not specifically limited in this application.

In an implementation, the heat management apparatus 203 includes an electric heating assembly 70. The electric heating assembly 70 is fastened to the coolant tank 60. The electric heating assembly 70 and the coolant tank 60 are adjacently arranged in the first direction X. The electric heating assembly 70 and the at least one pump 50 are adjacently arranged in the third direction Y. The projection of the coolant tank 60 covers a projection of the electric heating assembly 70 in the third direction Y.

In this embodiment of this application, the heat management apparatus 203 is configured in a stacked manner and is fastened to the coolant tank 60 in the first direction X. The electric heating assembly 70 is configured to electrically heat a coolant medium pipeline. In this embodiment of this application, a shape and structure of a water tank 60 may be approximately an inverted "L" shape. The electric heating assembly 70 is disposed at a bottom of a thickest location of the "L"-shaped water tank in the first direction X. When observed in the first direction X, a projection of the water tank 60 covers the projection of the electric heating assembly 70.

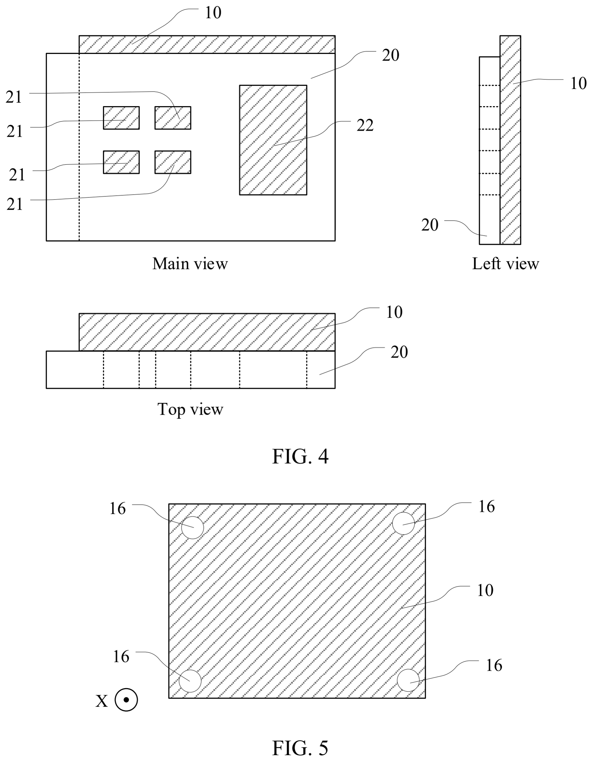

An embodiment of this application provides a flow channel plate stacking configuration, and a schematic of the flow channel plate stacking configuration is shown in FIG. 4. In the figure, a diagonal flow channel plate is the coolant flow channel plate 10, and a white flow channel plate is the refrigerant flow channel plate 20. It can be seen from a relationship of three views that the coolant flow channel plate 10 is attached and fastened to the refrigerant flow channel plate 20, and the refrigerant flow channel plate 20 is attached and fastened to the front plate surface 12 of the coolant flow channel plate 10.

In an implementation, the refrigerant flow channel plate 20 includes a first through hole 22. The first through hole 22 penetrates through the refrigerant flow channel plate 20 in the first direction X. The multi-way valve 30 is embedded in the first through hole 22. The multi-way valve 30 communicates with the coolant flow channel plate 10 and the refrigerant flow channel plate 20 through the first through hole 22.

In this embodiment of this application, the multi-way valve 30 is embedded in the front plate surface 12 of the coolant flow channel plate 10 through the first through hole 22 on the refrigerant flow channel plate 20.

It should be understood that detachable fastening between the multi-way valve 30 and the coolant flow channel plate includes that a mounting part is disposed on the multi-way valve 30, and the mounting part disposed on the multi-way valve 30 is detachably fastened to the coolant flow channel plate 10 through the first through hole 22; and further includes that a mounting part is disposed on the coolant flow channel plate 10, and the mounting part on the coolant flow channel plate 10 is detachably fastened to the multi-way valve 30 through the first through hole 22; and further includes that mounting parts are disposed on the multi-way valve 30 and the coolant flow channel plate 10 respectively, and a mounting part on the multi-way valve 30 and a mounting part on the coolant flow channel plate 10 are detachably fastened through the first through hole 22. This is not specifically limited in this application.

It should be understood that detachable communication between the multi-way valve 30 and the coolant flow channel plate 10 through the first through hole 22 includes that a communication part is disposed on the multi-way valve 30, and the communication part disposed on the multi-way valve 30 communicates with the coolant flow channel plate 10 through the first through hole 22; and further includes that a communication part is disposed on the coolant flow channel plate 10, and the communication part on the coolant flow channel plate 10 communicates with the multi-way valve 30 through the first through hole 22; and further includes that communication parts are disposed on the multi-way valve 30 and the coolant flow channel plate 10 respectively, and a communication part on the multi-way valve 30 communicates with a communication part on the coolant flow channel plate 10 through the first through hole 22. This is not specifically limited in this application.

It should be understood that detachable fastening and detachable communication between the multi-way valve 30 and the refrigerant flow channel plate 20 include detachable fastening and detachable communication manners between the multi-way valve 30 and the coolant flow channel plate 10. Details are not described herein in this application.

It should be understood that detachable fastening and communication include that detachable fastening and communication of the mounting part and the communication part are implemented by using a same mechanical structure, and further include that detachable fastening and communication are implemented by using a plurality of mechanical structures. This is not specifically limited in this application.

It should be understood that, disposed locations of related mechanical structures of the mounting part and the communication part include locations disposed within a range of the first through hole 22, and further include locations disposed outside a range of the first through hole 22. This is not specifically limited in this application.

In an implementation, the refrigerant flow channel plate 20 includes at least one second through hole 21. The at least one second through hole 21 penetrates through the refrigerant flow channel plate 20 in the first direction X. At least one of the evaporation plate heat exchanger 41 or the condensation plate heat exchanger 42 communicates with the coolant flow channel plate 10 through the at least one second through hole 21.

In this embodiment of this application, the refrigerant flow channel plate 20 includes four second through holes 21. Two second through holes 21 are configured to communicate with the evaporation plate heat exchanger 41, and the other two second through holes 21 are configured to communicate with the condensation plate heat exchanger 42. The four second through holes 21 are arranged in pairs in parallel in the second direction Z and in vertical in the third direction Y. In this arrangement manner, the evaporation plate heat exchanger 41 and the condensation plate heat exchanger 42 are arranged in the refrigerant flow channel plate 20 in the second direction Z or the third direction Y.

It should be understood that a manner in which the evaporation plate heat exchanger 41 and the condensation plate heat exchanger 42 detachably communicate with the coolant flow channel plate 10 includes a manner in which the multi-way valve 30 detachably communicates with the coolant flow channel plate 10. Details are not described herein in this application.

It should be understood that a detachable communication manner and a detachable fastening manner of the evaporation plate heat exchanger 41 and the condensation plate heat exchanger 42 and the refrigerant flow channel plate 20 include that detachable communication and detachable fastening are implemented through the second through hole 21, and further include that detachable communication and detachable fastening to the refrigerant flow channel plate 20 are implemented by disposing another communication part or mounting part. This is not specifically limited in this application.

It should be understood that detachable fastening and communication include that detachable fastening and communication of the mounting part and the communication part are implemented by using a same mechanical structure, and further include that detachable fastening and communication are implemented by using a plurality of mechanical structures. This is not specifically limited in this application.

It should be understood that a through hole is merely a name, and does not constitute any special limitation on this application. In some embodiments, the through hole is also referred to as a connection hole, a via hole, a penetrating hole, or the like. This is not specifically limited in this application.

It should be understood that structures such as sizes, sizes, and shapes of the first through hole 22 and the second through hole 21 are determined by a specific mounting environment and a size and a structure of a specific mounting device. This is not specifically limited in this application.

In an implementation, the coolant flow channel plate 10 includes at least one mounting through hole 16 and at least one fastener. Each mounting through hole 16 penetrates through the coolant flow channel plate 10 in the first direction X and is configured to accommodate one or more fasteners passing through the mounting through hole 16. The fastener is configured to fasten the coolant flow channel plate 10 to the refrigerant flow channel plate 20 and is configured to fasten the coolant flow channel plate 10 to a mounting location of the heat management apparatus 203.

In this embodiment of this application, the coolant flow channel plate 10 includes four mounting through holes 16, as shown in FIG. 5. The mounting through hole 16 is configured to accommodate the fastener passing through the mounting through hole 16. The fastener is configured to fasten the coolant flow channel plate 10 and the refrigerant flow channel plate 20, and is configured to fasten the entire heat management apparatus 203 to the to-be-mounted location.

It should be understood that, when the entire heat management apparatus 203 is mounted, the coolant flow channel plate 10 is mounted at the to-be-mounted location as a back plate. The fastener includes a fastener such as a screw, a bolt, or a nut. This is not specifically limited in this application.

It should be understood that a size, a size, a quantity, and the like of the mounting through hole 16 are determined by a weight, a size of the fastener, a quantity of fasteners, a feature of a to-be-mounted surface, and the like of the actual heat management integrated apparatus 203. This is not specifically limited in this application.

It should be understood that mounting of the entire heat management apparatus 203 includes the mounting through hole 16 and the fastener that are disposed on the coolant flow channel plate 10, and further includes a mounting through hole 16 and a fastener that are disposed on the refrigerant flow channel plate 20. A specific mounting manner and a quantity of mounting through holes are not specifically limited in this application.

It should be understood that, that the fastener is configured to fasten the coolant flow channel plate 10 and the refrigerant flow channel plate 20 includes that the coolant flow channel plate 10 is fastened to the refrigerant flow channel plate 20 based on a direction of the fastener, and the refrigerant flow channel plate 20 is used as a load-bearing plate; and further includes that the refrigerant flow channel plate 20 is fastened to the coolant flow channel plate 10 based on a direction of the fastener, and the coolant flow channel plate 10 is used as a load-bearing plate. This is not specifically limited in this application.

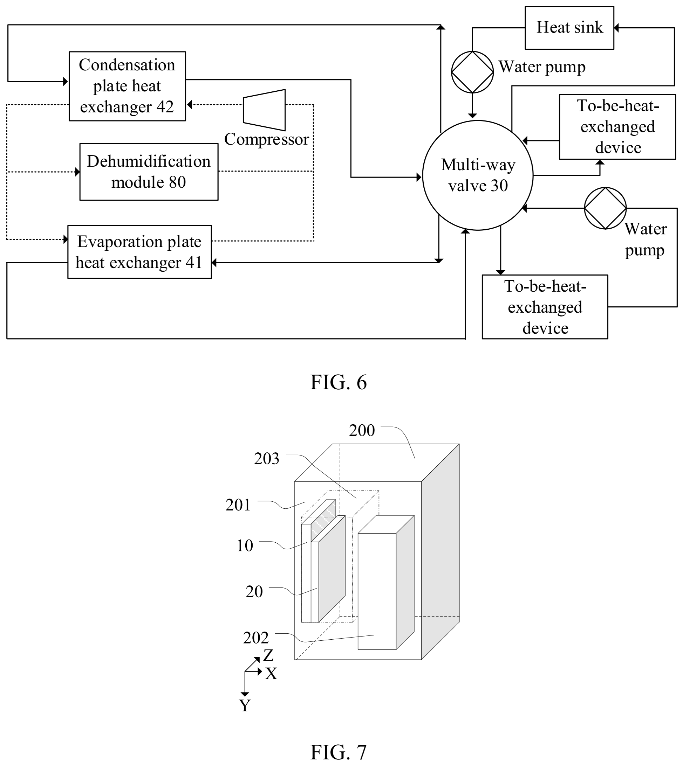

A schematic of pipeline communication of the heat management apparatus 203 according to an embodiment of this application is shown as FIG. 6. The apparatus includes two parts: a refrigerant loop (a dashed line loop) and a coolant loop (a solid line loop) respectively. The multi-way valve 30 is connected to a plurality of coolant loops and serves as a hub of the coolant loops. The multi-way valve 30 switches different flow channels to form communication of different cooling flow plate devices. The multi-way valve 30 switches different communication modes to form a new coolant heat circulation open circuit and/or loop. The coolant heat circulation open circuit communicates with the coolant end assembly to form a new coolant loop. In a group of coolant loops, the multi-way valve 30 communicates with the pump 50 and a heat sink. The pump 50 is configured to pressurize a coolant in the loop to promote coolant circulation. The heat sink is configured to exchange heat between the coolant in the loop and the environment. In another group of coolant loops, the multi-way valve 30 selects, based on a feature of the coolant end assembly, to add an assembly such as the pump 50 to the circulation loop, to promote coolant circulation in the loop.

In some other coolant loops, the condensation plate heat exchanger 42 is connected to the multi-way valve 30 to form a group of coolant circulation loops, and the evaporation plate heat exchanger 41 is connected to the multi-way valve 30 to form a group of coolant circulation loops. The refrigerant flow channel in the evaporation plate heat exchanger 42 communicates with the refrigerant flow channel in the condensation plate heat exchanger 42 through the refrigerant flow channel plate 20, to form a group of refrigerant circulation loops. In the flow channel of the condensation plate heat exchanger 42, the refrigerant changes from a gas state to a liquid state, and provides heat for cooling liquid in the coolant flow channel. In the flow channel of the evaporation plate heat exchanger 41, the refrigerant changes from a liquid state to a gas state, and takes away heat from cooling liquid in the coolant flow channel. The condensation plate heat exchanger 42 and the evaporation plate heat exchanger 41 form a heat exchange apparatus for a refrigerant flow path and a coolant flow path in the entire heat management apparatus.

In an implementation, a compressor apparatus is connected to in the refrigerant loop between the condensation plate heat exchanger 42 and the evaporation plate heat exchanger 41. The compressor apparatus is configured to pressurize the refrigerant to drive refrigerant circulation. The implementation further includes communicating a gas separation apparatus before the compressor. This is not specifically limited in this application.

In an implementation, the dehumidification module 80 is connected to in the refrigerant loop between the condensation plate heat exchanger 42 and the evaporation plate heat exchanger 41. The dehumidification module 80 is configured to exchange heat between the refrigerant flow path and a mounting environment, dehumidify the water vapor in the air, keep a dry working environment for the heat management apparatus 203, and reduce moisture condensation outside the apparatus. The dehumidification module 80 forms a heat management apparatus of the entire heat exchange apparatus and the environment.

In an implementation, the coolant end assembly includes a high-pressure coolant-side thermistor and an energy storage battery. The high-pressure coolant-side thermistor communicates with the energy storage battery, the pump, and the multi-way valve through the coolant flow channel to form a group of coolant loops that are configured to perform heat management for the energy storage battery. The energy storage battery includes a battery pack in a new energy vehicle or a new-energy energy storage cabinet. This is not specifically limited in this application.

In an implementation, the coolant end assembly further includes a power conversion system (Power Conversion System, PCS). The PCS communicates with the multi-way valve through the coolant flow channel to form a group of coolant loops that are configured to perform heat management for the power conversion system. The PCS is an inverter for conversion between an alternating current and a direct current. This is not specifically limited in this application.

FIG. 7 is a schematic of an energy storage system according to an embodiment of this application.

In an implementation, the energy storage system includes a cabinet 200. The cabinet 200 is configured to accommodate the energy storage module 202 and the heat management apparatus 203. The cabinet 200 includes an openable and closable cabinet door 201. The cabinet door 201 is configured to fasten the heat management apparatus 203. The cabinet door 201, the coolant flow channel plate 10, and the refrigerant flow channel plate 20 are sequentially and adjacently arranged in the first direction X. The fastener on the coolant flow channel plate 10 is configured to fasten the coolant flow channel plate 10 to the refrigerant flow channel plate 20, and is configured to fasten the coolant flow channel plate 10 to the cabinet door 201 of the energy storage system.

In this embodiment of this application, the energy storage system includes the cabinet 200. The cabinet includes the openable and closable cabinet door 201. The heat management apparatus 203 is fastened inside the cabinet door 201. When observed in the first direction X, the cabinet door, the coolant flow channel plate 10, and the refrigerant flow channel plate 20 are sequentially arranged.

It should be understood that fastening of the heat management apparatus 203 and the cabinet door 201 is implemented by using the mounting through hole 16 and the fastener on the coolant flow channel plate 10; or is implemented by using a combination of the mounting through hole on the refrigerant flow channel plate 20, the mounting through hole 16 on the coolant flow channel plate 10, and a corresponding fastener. This is not specifically limited in this application.

It should be understood that, to accelerate air circulation in the cabinet 200 and accelerate dehumidification efficiency of air passing through the dehumidification module 80, a fan may be further disposed in the cabinet 200 to accelerate air circulation and improve dehumidification efficiency. This is not specifically limited in this application.

It should be understood that, that the heat management apparatus 203 is fastened to the cabinet 200 includes that the heat management apparatus is fastened to the cabinet door 201, and further includes that the heat management apparatus is fastened to another surface other than a top surface in the cabinet 200. This is not specifically limited in this application.

A person of ordinary skill in the art may be aware that, with reference to the examples described in embodiments disclosed in this specification, units and steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into the units is merely logical function division and may be another division manner in actual implementation. For example, a plurality of units or components may be combined or integrated into another system, or some features may be ignored or not performed.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An energy storage system, wherein the energy storage system comprises a heat management apparatus and an energy storage module, the heat management apparatus is configured to exchange heat with the energy storage module, and the heat management apparatus comprises a refrigerant flow channel plate, a coolant flow channel plate, a multi-way valve, an evaporation plate heat exchanger, a condensation plate heat exchanger, and at least one pump;
the refrigerant flow channel plate and the coolant flow channel plate are adjacently arranged in a first direction; the evaporation plate heat exchanger and the condensation plate heat exchanger are fastened to the refrigerant flow channel plate, and the multi-way valve, the evaporation plate heat exchanger, and the condensation plate heat exchanger are adjacently arranged in a second direction;
the at least one pump is arranged adjacent to the coolant flow channel plate in the first direction respectively, and the at least one pump is arranged adjacent to the refrigerant flow channel plate in a third direction respectively; and
any two of the first direction, the second direction, and the third direction are perpendicular to each other.

2. The energy storage system according to claim 1, wherein the refrigerant flow channel plate is arranged between the evaporation plate heat exchanger and the coolant flow channel plate in the first direction and is arranged between the condensation plate heat exchanger and the coolant flow channel plate, and the evaporation plate heat exchanger and the condensation plate heat exchanger are adjacently arranged in the second direction or the third direction.

3. The energy storage system according to claim 1 or 2, wherein the heat management apparatus comprises two pumps, and the two pumps are separately configured to pressurize coolant in the coolant flow channel plate, and
the two pumps are separately fastened to the coolant flow channel plate, and the two pumps are adjacently arranged in the second direction.

4. The energy storage system according to any one of claims 1 to 3, wherein the heat management apparatus comprises a coolant tank, the coolant tank is stacked on the coolant flow channel plate in the third direction, and a projection of the coolant tank covers a projection of the coolant flow channel plate and a projection of the refrigerant flow channel plate in the third direction.

5. The energy storage system according to claim 4, wherein the heat management apparatus comprises an electric heating assembly, the electric heating assembly is fastened to the coolant tank, the electric heating assembly and the coolant tank are adjacently arranged in the first direction, the electric heating assembly and the at least one pump are adjacently arranged in the third direction, and the projection of the coolant tank covers a projection of the electric heating assembly in the third direction.

6. The energy storage system according to any one of claims 1 to 5, wherein the heat management apparatus further comprises a dehumidification module, and the dehumidification module and the multi-way valve are arranged on two sides of the evaporation plate heat exchanger and the condensation plate heat exchanger in the second direction.

7. The energy storage system according to any one of claims 1 to 6, wherein the coolant flow channel plate comprises two second side surfaces in the second direction, one of the second side surfaces comprises a plurality of connection ports, the connection ports are configured to communicate the coolant flow channel plate with one to-be-heat-exchanged device, and the plurality of connection ports on the second side surface are sequentially arranged at intervals in the third direction.

8. The energy storage system according to claim 7, wherein the plurality of connection ports on the second side surface are arranged opposite to the dehumidification module in the second direction.

9. The energy storage system according to claim 4, wherein the coolant flow channel plate comprises two third side surfaces in the third direction, one third side surface away from the coolant tank in the third direction comprises a plurality of connection ports, and the plurality of connection ports on the third side surface are sequentially arranged at intervals in the second direction.

10. The energy storage system according to claim 9, wherein the plurality of connection ports on the third side surface are arranged opposite to the coolant tank in the third direction.

11. The energy storage system according to any one of claims 1 to 10, wherein the refrigerant flow channel plate comprises a first through hole, the first through hole penetrates through the refrigerant flow channel plate in the first direction, the multi-way valve is embedded in the first through hole, and the multi-way valve communicates with the coolant flow channel plate and the refrigerant flow channel plate through the first through hole.

12. The energy storage system according to any one of claims 1 to 11, wherein the refrigerant flow channel plate comprises at least one second through hole, the at least one second through hole penetrates through the refrigerant flow channel plate in the first direction, and at least one of the evaporation plate heat exchanger or the condensation plate heat exchanger communicates with the coolant flow channel plate through the at least one second through hole.

13. The energy storage system according to any one of claims 1 to 12, wherein the energy storage system comprises a cabinet, the cabinet is configured to accommodate the energy storage module and the heat management apparatus, the cabinet comprises an openable and closable cabinet door, and the cabinet door is configured to fasten the heat management apparatus; and
the cabinet door, the coolant flow channel plate, and the refrigerant flow channel plate are sequentially and adjacently arranged in the first direction.

14. The energy storage system according to claim 13, wherein the coolant flow channel plate comprises at least one mounting through hole and at least one fastener, each mounting through hole penetrates through the coolant flow channel plate in the first direction and is configured to accommodate one or more fasteners passing through the mounting through hole, and the fastener is configured to fasten the coolant flow channel plate to the refrigerant flow channel plate and fasten the coolant flow channel plate to the cabinet door of the energy storage system.
